# DEMANDE DE BREVET EUROPEEN

(11) **EP 4 403 479 A1**
(43) Date de publication de la demande: **24.07.2024**
(21) Numéro de dépôt: 23152381.2
(22) Date de dépôt: 19.01.2023
(51) Int. Cl.: B65B 61/24, B67C 3/24, B67C 3/22

(54) **DISPOSITIF DE RETOURNEMENT DE FOND DE RÉCIPIENT**

(71) Demandeur: Sidel Participations, 76930 Octeville-sur-Mer (FR)
(72) Inventeur: GODET, Florian, 76930 Octeville-sur-Mer (FR)
(74) Mandataire: Sidel Group

(57) **Abrégé**

L'invention concerne un dispositif (1) de retournement de fond (21) de récipients (2), comprenant :
- des moyens de retournement (11), et
- au moins un outil (12) de maintien du récipient (2),

chaque outil (12) de maintien comprenant un organe de retenue (121), caractérisé en ce que l'organe de retenue (121) présente une extrémité d'appui (1211) à amener en appui sur un récipient (2),
et en ce que chaque outil (12) de maintien comprend également :
- un organe de centrage (122) monté dans l'organe de retenue (121),

l'organe de centrage (122) étant mobile, au sein de l'organe de retenue (121).

## Description

Le domaine de l'invention est celui de la conception et de la fabrication d'outils de conditionnement, également connu sous le terme anglophone « packaging ».

Plus précisément, l'invention concerne en particulier, un dispositif de retournement de fond de récipients après remplissage par un produit chaud, puis bouchage, ainsi qu'un procédé correspondant.

Pour des raisons d'hygiène et de garantie de l'intégrité des produits à consommer, certains récipients sont remplis par des produits chauds (généralement compris entre 60°C et 90°C).

A titre d'exemple, on peut citer les bouteilles dans lesquelles sont contenus des jus de fruits ou des thés par exemple.

Lorsque les récipients sont remplis par un produit chaud puis bouchés, le refroidissement du contenu provoque une diminution de la pression qui tend à déformer le récipient.

Il en résulte alors une mauvaise stabilité du récipient qui peut empêcher la formation de groupements de récipients (également connus sous le terme anglophone « packs ») et donc empêcher la palettisation pour faciliter le transport jusqu'en points de vente.

Pour répondre à cette problématique, des récipients dédiés au remplissage à chaud ont été développés.

Certains de ces récipients comprennent un fond pourvu d'une voûte inversable (également appelée diaphragme inversable).

Plus précisément, le diaphragme du fond de ces récipients peut adopter :
- une configuration de remplissage dans laquelle la voûte forme une excroissance présentant une concavité depuis l'intérieur du récipient, et
- une configuration de rigidification dans laquelle la voûte forme une excroissance présentant une concavité depuis l'extérieur du récipient.

Ainsi, lors du remplissage, la voûte est positionnée dans sa configuration de remplissage.

Le changement de configuration du diaphragme est également connu des techniciens du domaine sous la dénomination « retournement de fond ».

Lorsque le récipient est rempli par un liquide chaud et bouché, le refroidissement du contenu provoque une dépression à l'intérieur du récipient qui tend à déformer le récipient et le rend facilement malléable.

Par malléable, il est entendu que le récipient s'ovalise et que sa forme peut être facilement modifiée par un utilisateur, cela avec peu d'efforts.

En outre, comme expliqué précédemment, ce manque de rigidité structurelle limite, voire empêche, la palettisation des récipients remplis.

Le retournement de la forme de la voûte du fond permet alors de répondre à ce problème.

En effet, lorsque le fond passe de sa configuration de remplissage à sa configuration de rigidification, il réduit le volume du récipient, ce qui provoque une augmentation de la pression à l'intérieur du récipient.

Cette augmentation de pression permet de compenser la dépression due au refroidissement du contenu et au refroidissement du gaz présent en partie supérieure du récipient.

La compensation de la dépression rend alors le récipient plus rigide de sorte qu'il puisse être mis en pack puis palettisé pour permettre son transport.

Pour assurer un passage du fond de sa configuration de remplissage à sa configuration de rigidification, un dispositif de retournement de fond de récipient est utilisé.

Un tel dispositif comprend classiquement :
- des moyens de convoyage des récipients selon une trajectoire prédéterminée ;
- des moyens de retournement du fond, et
- des moyens de maintien du récipient.

Les moyens de maintien permettent de retenir le récipient lorsque les moyens de retournement exercent une force sur le fond du récipient pour le positionner en configuration de rigidification depuis sa configuration de remplissage.

Toutefois, un tel dispositif reste perfectible.

En effet, les dispositifs actuels peuvent engendrer un risque de dégradation du récipient lors du retournement du fond.

Les dispositifs actuels exercent une contre pression sur le bouchon afin de maintenir le récipient lors du retournement du fond.

Or, si cette façon de faire convient pour des récipients de petites dimensions (par exemple les récipients d'une capacité inférieure à un litre) ils ne conviennent pas pour les récipients de grandes dimensions et encore moins pour les récipients présentant une portion située entre le col et le corps, c'est-à-dire une épaule, qui présente une forme galbée. En effet, un effort exercé sur le col peut provoquer l'enfoncement du col dans le corps du récipient.

Lorsque les récipients atteignent le dispositif de retournement, c'est-à-dire après remplissage, bouchage, et refroidissement, leur maintien durant le processus de retournement du fond n'est ainsi pas toujours correctement assuré.

Les moyens de maintien sont alors conçus pour permettre le bon positionnement des récipients et contrer les efforts lors du retournement du fond.

Pour cela, les moyens de retenue comprennent, pour la partie haute du récipient, une cloche destinée à venir en appui partiel sur l'épaule ou le bouchon du récipient et à accompagner le récipient durant son déplacement le long des moyens de convoyage. Le positionnement du récipient lors du retournement du fond est notamment réalisé, pour la partie basse, par une bague qui entoure le récipient dans une partie inférieure.

La cloche est mobile en hauteur selon un axe de translation perpendiculaire à la trajectoire du récipient et présente un contour ouvert qui permet son amenée en coopération sur un récipient, permettant également d'agir sur le centrage du récipient, ou son retrait après retournement du fond.

Pour les récipients de grandes dimensions, l'utilisation d'une telle cloche n'est donc pas possible puisqu'à cause de son ouverture, l'effort en réaction exercé par la cloche n'est pas purement axial, mais au moins partiellement latéral, engendrant alors une déformation du récipient lors du retournement du fond.

En d'autres termes, les efforts en réaction et de retournement ne sont pas opposés, ce qui provoque le flambage du récipient.

L'invention a notamment pour objectif de pallier les inconvénients de l'art antérieur.

Plus précisément, l'invention a pour objectif de proposer un dispositif de retournement de fond de récipients qui ne provoque pas de dégradation au récipient, ou quasiment.

L'invention a également pour objectif de fournir un tel dispositif de retournement qui permet un guidage continu des récipients durant leur transfert dans une machine de conditionnement comprenant un tel dispositif de retournement.

L'invention a en outre pour objectif de fournir un tel dispositif de retournement qui facilite le retournement du fond des récipients.

Ces objectifs, ainsi que d'autres qui apparaîtront par la suite, sont atteints grâce à l'invention qui a pour objet un dispositif de retournement de fond de récipients, le dispositif de retournement comprenant :
- des moyens de retournement du fond selon un axe de translation, et
- au moins un outil de maintien du récipient,
   le au moins un outil de maintien comprenant un organe de retenue présentant un évidement central, le au moins un outil de maintien étant mobile en translation selon l'axe de translation entre une position écartée par rapport à un récipient et une position de coopération avec un récipient,
   caractérisé en ce que l'organe de retenue présente une extrémité d'appui qui, dans la position de coopération, vient en appui sur une épaule du récipient,
et en ce que le au moins un outil de maintien comprend également :
- un organe de centrage monté dans l'évidement central de l'organe de retenue, et destiné à coopérer avec un bouchon solidaire d'un col du récipient,
l'organe de centrage étant mobile, au sein de l'organe de retenue, entre :
- une première position, correspondant à la position écartée de l'organe de retenue, dans laquelle il est situé au voisinage de l'extrémité d'appui de l'organe de retenue, et
- une deuxième position, correspondant à la position de coopération de l'organe de retenue, dans laquelle il est écarté de l'extrémité d'appui de l'organe de retenue.

Un tel dispositif de retournement permet de réaliser le retournement du fond des récipients sans risque de les abîmer par exemple par poinçonnement.

En effet, grâce au montage mobile de l'organe de centrage dans l'organe de retenue, le centrage du récipient peut être réalisé avant le retournement du fond, ce qui permet une bonne reprise des efforts de retenue par le récipient.

Ainsi, malgré la force exercée par les moyens de retournement sur le fond du récipient, le centrage correct du récipient grâce à l'organe de centrage, préalablement à la retenue par l'organe de retenue, permet que les efforts soient repris par les zone structurelles du récipient prévues à cet effet.

Selon un aspect avantageux, l'organe de centrage présente une forme tronconique concave, c'est-à-dire évasée vers l'extérieur, destinée à coopérer avec le bouchon du récipient.

Cette forme tronconique concave permet de centrer mécaniquement le récipient par coopération avec son bouchon.

En effet, lorsque le récipient est mal positionné, la venue de l'organe de centrage en coopération avec le bouchon permet d'aligner le récipient. Cela est dû à la forme tronconique qui assure un déplacement du récipient pour que le bouchon soit entièrement au contact de la forme tronconique et donc correctement positionné de sorte que l'axe principal du récipient soit confondu, ou quasiment, avec l'axe de translation des moyens de retournement.

Selon un autre aspect avantageux, l'extrémité d'appui de l'organe de retenue présente une forme tronconique concave, c'est-à-dire évasée vers l'extérieur, destinée à venir en appui sur l'épaule du récipient.

Cette forme tronconique concave, c'est-à-dire évasée vers l'extérieur, permet un bon maintien du récipient.

Cette forme assure aussi une bonne coopération entre l'épaule du récipient (qui est généralement tronconique également ou arrondie) et l'organe de retenue.

Cela évite ainsi que les efforts de retournement ne soient repris que par une seule partie de l'organe de retenue, ce qui pourrait engendrer une dégradation du récipient et notamment son écrasement non uniforme.

Selon un autre aspect avantageux, l'organe de retenue présente une forme de cloche, et le au moins un outil de maintien comprend un élément de rappel intercalé entre un fond de la cloche et l'organe de centrage, l'élément de rappel tendant à positionner l'organe de centrage dans la première position.

L'élément de rappel assure ainsi un centrage des récipients durant le déplacement de l'organe de retenue jusqu'à ce que ce dernier assure la retenue du récipient.

Ainsi, le récipient reste correctement positionné entre le début du centrage et le maintien final du récipient.

Il n'y a donc pas de risques que le récipient ré-adopte un mauvais positionnement avant d'être maintenu en position.

Selon un autre aspect avantageux, l'organe de retenue comprend un embout portant l'extrémité d'appui, l'embout étant monté de manière amovible à une extrémité libre de la cloche, opposée au fond.

L'utilisation d'un embout permet une adaptation du dispositif à différentes tailles ou formes de récipients.

En procédant à un changement de l'embout, il est possible d'adapter le dispositif de retournement à la taille, et notamment au diamètre des récipients à maintenir.

Selon un autre aspect avantageux, le dispositif de retournement comprend un arbre solidaire de moyens moteurs, l'organe de retenue étant monté solidaire de l'arbre éventuellement par l'intermédiaire de moyens d'amortissement.

Les moyens d'amortissement permettent une amenée en douceur de l'organe de retenue contre le récipient à maintenir, et que la pression exercée sur le récipient se fasse de manière croissante.

Ainsi, les conditions pour que le récipient ne se déforme pas lors du retournement du fond sont améliorées.

L'invention concerne également un outil de maintien pour dispositif de retournement de fond de récipients, tel que précédemment décrit.

L'invention concerne en outre un procédé de retournement d'un fond de récipient au moyen d'un dispositif de retournement tel que précédemment décrit, le procédé comprenant les étapes consistant à :
- maintenir un récipient dont le fond est à retourner, et
- retourner le fond dudit récipient par translation des moyens de retournement le long de l'axe de translation,
caractérisé en ce que l'étape consistant à maintenir le récipient comprend les sous-étapes consistant à :
- déplacer l'outil de maintien en direction du récipient suivant l'axe de translation, jusqu'à positionner l'organe de centrage en appui du bouchon dudit récipient ;
- maintenir l'organe de centrage en appui sur le bouchon dudit récipient, et déplacer,
- déplacer l'organe de retenue en direction du récipient suivant l'axe de translation.

Selon un aspect avantageux, le procédé de retournement d'un fond met en oeuvre l'une au moins des règles suivantes :
- le retournement du fond est initié lorsque l'organe de centrage est en appui sur le récipient et avant que l'organe de retenue ne soit en appui sur une épaule du récipient ;
- l'organe de retenue se dégage du récipient avant la fin d'un mouvement de retour des moyens de retournement jusqu'à une position initiale.
- l'organe de retenue est en contact avec le récipient préalablement au début d'un mouvement des moyens de retournement ;
- l'organe de retenue est maintenu au contact du récipient jusqu'à la fin du mouvement des moyens de retournement.

Ces différentes règles permettent d'obtenir un procédé de retournement du fond des récipients pour lequel l'intégrité structurelle du récipient est préservée.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] figure 1 est une représentation schématique de face d'un dispositif de retournement de fond de récipient, selon l'invention ;
[Fig. 2] la figure 2 est une vue de détail d'un outil de maintien pour le dispositif de retournement de fond de récipient, selon l'invention ;
[Fig. 3] la figure 3 est une représentation schématique d'une première sous-étape de maintien d'un récipient durant un procédé de retournement d'un fond de récipient, au moyen du dispositif de retournement selon l'invention ;
[Fig. 4] la figure 4 est une représentation schématique d'une deuxième sous-étape de maintien d'un récipient durant un procédé de retournement d'un fond de récipient, au moyen du dispositif de retournement selon l'invention ;
[Fig. 5] la figure 5 est une représentation schématique d'une troisième sous-étape de maintien d'un récipient durant un procédé de retournement d'un fond de récipient, au moyen du dispositif de retournement selon l'invention ;
[Fig. 6] la figure 6 est une représentation schématique d'un fond de récipient avant et après retournement du fond.

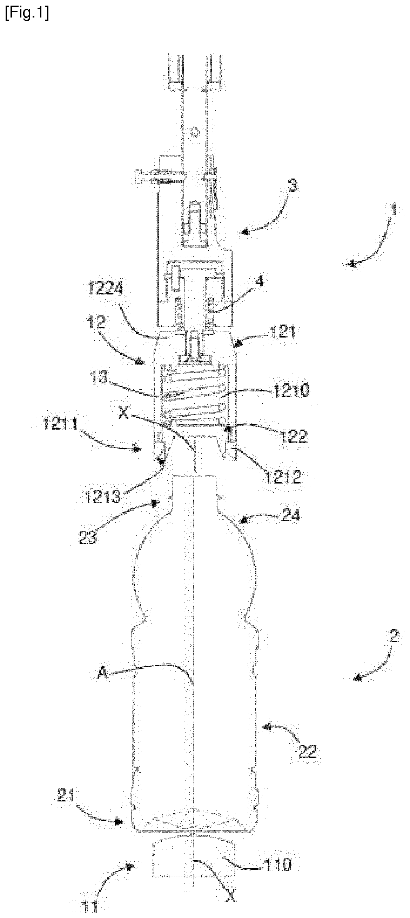

En référence à la figure 1, un dispositif 1 de retournement de fond 21 de récipient 2, selon l'invention, est illustré.

Tel que cela apparaît sur la figure 1, un récipient 2, notamment un récipient 2 en matière plastique tel que le PET, comprend :
- un corps 22 s'étendant selon un axe A principal d'extension ;
- un fond 21 fermant le corps 22 à une extrémité inférieure du récipient 2, et
- un col 23 présentant une embouchure, situé à une extrémité supérieure du récipient 2, opposée au fond 21.

Le col 23 est relié au corps 22 par l'intermédiaire d'une épaule 24.

L'embouchure du col est fermée par un bouchon 25, après remplissage du récipient 2.

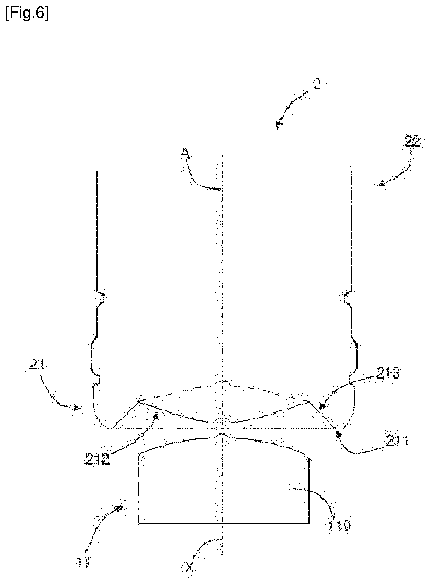

Comme cela est illustré plus en détails sur la figure 6, le fond 21 présente :
- une assise 211 permettant au récipient 2 de reposer sur un plan de pose,
- une voûte 212 s'étendant depuis l'axe A principal en direction de l'assise 211, et
- une portion tronconique 213 reliant l'assise 211 à la voûte 212.

La voûte 212 est retournable entre une configuration concave et une configuration convexe. D'autres formes de fond 21 retournables sont également possibles.

Plus précisément, la voûte 212 peut adopter :
- une première position, illustrée en trait plein sur la figure 6, dans laquelle la voûte 212 présente une convexité depuis l'extérieur du récipient 2, et
- une deuxième position, illustrée en traits pointillés sur la figure 6, dans laquelle la voûte 212 présente une concavité depuis l'extérieur du récipient 2.

La concavité et la convexité sont présentées par la partie centrale de la voûte 212.

Le dispositif 1 de retournement permet de modifier la position de la voûte 212 du fond 21 du récipient 2 pour la faire passer de sa première position, dans laquelle elle se trouve après remplissage du récipient, par exemple par un produit chaud, à sa deuxième position.

Pour cela, le dispositif 1 de retournement comprend :
- des moyens de retournement 11 du fond 21, mobiles selon un axe X de translation, et
- au moins un outil 12 de maintien du récipient 2.

L'axe X de translation est avantageusement confondu avec l'axe A principal d'extension du récipient 2.

Tel que cela est illustré par les figures 1 et 6, les moyens de retournement 11 comprennent un insert 110 mobile en translation le long de l'axe X de translation, cet insert 110 étant mû en translation par l'intermédiaire de moyens moteurs non illustrés.

A titre indicatif, les moyens moteurs peuvent prendre la forme d'un vérin ou d'un système de came et suiveur de came, l'insert 110 étant alors relié à un suiveur de came circulant sur une came solidaire d'un bâti du dispositif 1 de retournement.

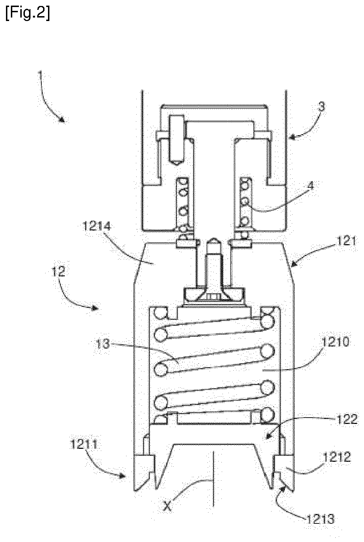

En référence à la figure 2, chaque outil 12 de maintien comprend un organe de retenue 121 et un organe de centrage 122.

L'organe de centrage 122 est destiné à assurer le centrage d'un récipient 2 le long de l'axe X de translation, préalablement à l'action de l'organe de retenue 121.

En d'autres termes, l'organe de centrage 122 permet de rendre coaxiaux l'axe X de translation du des moyens de retournement 11 et l'axe A principal du récipient 2.

Plus précisément, l'organe de retenue 121 présente un évidement central 1210 central à l'intérieur duquel l'organe de centrage 122 est monté. Préférentiellement, l'organe de centrage est monté concentrique à l'organe de retenue 121.

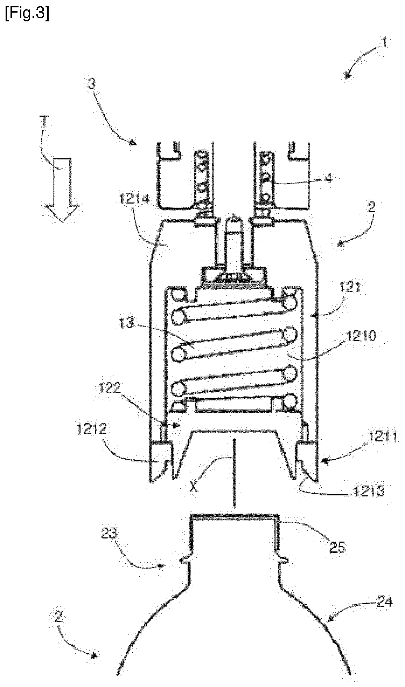

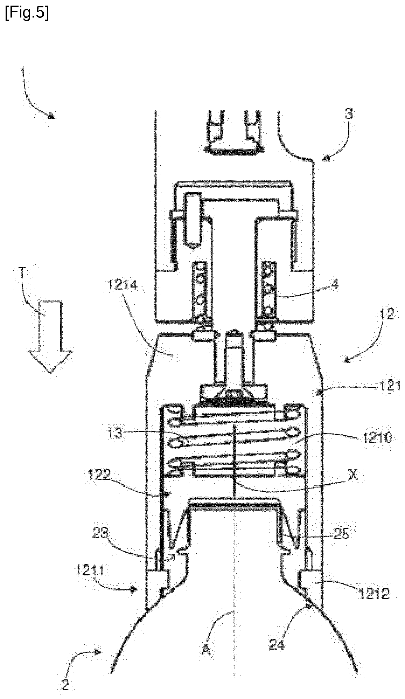

L'organe de retenue 121 est mobile en translation selon l'axe X de translation entre une position écartée par rapport à un récipient 2, tel qu'illustré sur la figure 3, et une position de coopération avec un récipient 2 tel qu'illustré sur la figure 5.

L'organe de retenue 121 présente une extrémité d'appui 1211 qui, dans la position de coopération, vient contre le récipient 2 à traiter, préférablement au niveau de l'épaule 24. Pour rappel, l'épaule est définie comme étant la portion du récipient qui forme la liaison entre le corps et le col, le col présentant des dimensions inférieures au corps. L'épaule 24 peut présenter plusieurs formes, par exemple une forme tronconique ou une forme galbée, par exemple sphérique.

Plus particulièrement, comme illustré par la figure 6, l'extrémité d'appui 1211 est portée par un embout 1212, par exemple réalisé en matière plastique.

L'embout 1212 présente une portion tronconique 1213 destinée à venir au contact de l'épaule 24 du récipient 2.

L'embout 1212 de l'organe de retenue 121 présente une forme tronconique concave permettant une adaptabilité à différentes formes d'épaule des récipients 2.

En référence à la figure 2, l'organe de retenue 121 présente une forme de cloche ayant un fond 1214 opposé à l'extrémité d'appui 1211.

L'organe de centrage 122 est monté concentrique dans l'évidement central 1210 central de l'organe de retenue 121 et est destiné à coopérer avec le bouchon 25 solidaire du col 23 du récipient 2.

L'organe de centrage 122 est mobile au sein de l'organe de retenue 121 entre :
- une première position dans laquelle il est situé au voisinage de l'extrémité d'appui 1211 de l'organe de retenue 121, et
- une deuxième position dans laquelle il est écarté de l'extrémité d'appui 1211 de l'organe de retenue 121.

La première position de l'organe de centrage 122 correspond avantageusement à la position écartée de l'organe de retenue 121 et la deuxième position de l'organe de centrage 122 correspond avantageusement à la position de coopération de l'organe de retenue 121.

En référence à la figure 5, lorsque l'extrémité d'appui 1211 de l'organe de retenue 121 est au contact de l'épaule 24 du récipient 2, l'organe de centrage 122 est positionné dans sa deuxième position et comprime alors l'élément de rappel 13. L'élément de rappel 13 exerce ainsi un effort pour maintenir en coopération l'organe de centrage 122 sur le récipient 2, notamment sur le bouchon 25, ce qui maintient le centrage du récipient 2 pour le retournement du fond 21.

A l'inverse, lorsque l'organe de retenue 121 est déplacé pour libérer le récipient 2 après retournement, l'élément de rappel 13 exerce alors un effort sur l'organe de centrage 122 pour le positionner dans sa première position et donc l'écarter du fond 1214 de l'organe de retenue 121.

L'organe de centrage 122 présente une forme tronconique concave, c'est-à-dire une forme évasée vers l'extérieur, destinée à coopérer avec le récipient 2, particulièrement avec son bouchon 25.

Tel que cela est visible sur les figures 2, 3, 4 et 5, le dispositif 1 de retournement, comprend, pour chaque outil 12 de maintien, un élément de rappel 13 intercalé entre le fond 1214 de la cloche de l'organe de retenue 121, et l'organe de centrage 122.

Cet élément de rappel 13 tend à positionner l'organe de centrage 122 dans la première position.

A titre d'exemple illustratif et non limitatif, l'élément de rappel 13, est un ressort de compression intercalé entre l'organe de centrage 122 et le fond 1214 de l'organe de retenue 121.

Selon le mode de réalisation, illustré sur les figures 1 à 5, l'embout 1212 formant l'extrémité 1211 d'appui des moyens de maintien 121 se présente sous la forme d'une bague annulaire continue.

Selon une variante non illustrée, l'embout 1212 de chaque outil 12 de maintien peut être discontinu autour de l'axe X de translation.

Plus particulièrement, dans le cas où l'extrémité d'appui 1211 est discontinue, chaque section d'appui, c'est-à-dire portion de l'embout 1212 venant au contact de l'épaule 24 du récipient 2, est régulièrement espacé circonférentiellement autour de l'axe X de translation, de sorte que la force créée par un déplacement le long de l'axe X ne s'étende que dans ce même axe.

Dans le cas d'un nombre impair de portions de contact, toutes les portions de contact, sont équidistantes les unes des autres.

Dans le cas d'un nombre pair de portions de contact, l'extrémité d'appui 1211 est alors symétrique par rapport à un plan de symétrie contenant l'axe X de translation.

Le dispositif 1 de retournement comprend également un arbre 3 solidaire de moyens moteurs non représentés, l'organe de retenue 121 étant monté solidaire de l'arbre 3 par l'intermédiaire de moyens d'amortissement 4.

Les moyens d'amortissement 4 sont, par exemple, un ressort de compression.

De tels moyens d'amortissement 4 favorisent une amenée douce des moyens de maintien 121 au contact du récipient 2.

Ainsi, l'effort de maintien exercé sur le récipient 2 selon l'axe X de translation est progressif, ce qui évite un poinçonnement du récipient 2, et donc une déformation du récipient 2 ou un mauvais positionnement du récipient 2 pouvant empêcher le retournement du fond 21.

Le dispositif 1 de retournement est intégré dans une machine de conditionnement de produits. A titre d'exemple, le dispositif 1 de retournement peut être intégré à un système présentant des fonctions de bouchage d'un récipient, auquel cas le dispositif 1 de retournement est positionné en aval de la fonction de bouchage selon le sens de défilement des récipients dans la machine. Le dispositif1 de retournement peut également être intégré à un système présentant des fonctions d'étiquetage des récipients, auquel cas il est préférablement positionné en amont des moyens réalisant la fonction d'étiquetage.

Le retournement d'un fond 21 de récipient 2 se fait selon un procédé comprenant les étapes consistant à :
- maintenir ledit récipient 2 à l'aide d'un outil 121 de maintien, et
- retourner le fond 21 dudit récipient 2 par translation des moyens de retournement 11 le long de l'axe X de translation.

L'étape consistant à maintenir le récipient 2 est à présent décrite en référence aux figures 3, 4 et 5.

L'étape consistant à maintenir le récipient 2 comprend une première sous-étape consistant à déplacer, selon un mouvement de translation T, l'outil de maintien 12 en direction du récipient 2 tel qu'illustré sur la figure 3.

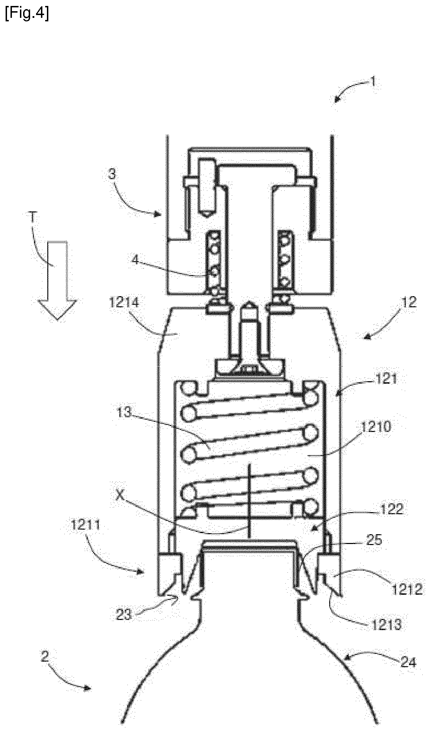

Ce déplacement de l'outil de maintien 12 est réalisé selon l'axe X de translation, jusqu'à positionner l'organe de centrage 122 en appui du bouchon 25 du récipient 2, tel que cela est illustré sur la figure 4.

Lorsque l'organe de centrage 122 coopère avec l'extrémité supérieure du récipient 2, notamment son bouchon 25, la forme tronconique de l'organe de centrage 122 permet de centrer le récipient 2, par coopération avec le bouchon 25, de sorte que l'axe A principal du récipient 2 soit confondu, ou à tout le moins parallèle, avec l'axe X de translation.

La sous-étape suivante consiste à maintenir l'organe de centrage 122 en appui sur le bouchon 25 du récipient 2.

Pour cela, l'élément de rappel 13 repousse l'organe de centrage 122 à l'opposé du fond de l'organe de retenue 121, c'est-à-dire contre le bouchon 25.

La dernière sous-étape consiste à déplacer l'organe de retenue 121 toujours selon la direction de déplacement T, et selon l'axe X de translation, jusqu'à positionner l'extrémité d'appui 1211 de l'organe de retenue 121 en appui sur l'épaule 24 du récipient 2 comme illustré sur la figure 5, préférablement au niveau de son épaule 24.

Lorsque le récipient 2 est centré et maintenu grâce à l'outil 12 de maintien, les moyens de retournement 11 peuvent alors être actionnés pour retourner le fond 21 du récipient et positionner la voûte 212 dans la position concave, c'est-à-dire une configuration de rigidification, tel qu'illustré en traits pointillés sur la figure 6.

Lorsque la voûte 212 est retournée, l'outil 12 de maintien peut alors être écarté du récipient 2.

Pour cela, l'outil 12 de maintien est déplacé, toujours selon l'axe X de translation, dans une direction opposée à la direction de déplacement T.

Cela provoque alors, en premier lieu, le désengagement de l'extrémité d'appui 1211 par rapport à l'épaule 24 du récipient.

Le déplacement de l'outil 12 de maintien est réalisé jusqu'à ce que l'organe de centrage 122 se désengage, en deuxième lieu, du bouchon 25 ce qui engendre une libération totale du récipient 2.

De préférence, le procédé de retournement d'un fond 21 met en oeuvre l'une au moins des règles suivantes :
- le retournement du fond 21 est initié lorsque l'organe de centrage 122 est en appui sur le récipient 2 et avant que l'organe de retenue 121 ne soit en appui sur une épaule 24 du récipient 2 ;
- l'organe de retenue 121 se dégage du récipient 2 avant la fin d'un mouvement de retour des moyens de retournement 11 jusqu'à une position initiale.
- l'organe de retenue 121 est en contact avec le récipient 2 préalablement au début d'un mouvement des moyens de retournement 11 ;
- l'organe de retenue 121 est maintenu au contact du récipient 2 jusqu'à la fin du mouvement des moyens de retournement 11.

Le dispositif 1 de retournement est monté sur un carrousel solidaire d'un bâti de la machine de conditionnement. Dès lors, chaque outil 12 de maintien suit le déplacement du récipient avec lequel il coopère selon un déplacement curviligne.

Le dispositif 1 de retournement qui vient d'être décrit permet d'assurer un retournement efficace du fond 21 d'un récipient 2 tout en limitant les risques de dégradation du récipient 2 lors du retournement du fond 21.

Grâce à la mobilité de l'organe de centrage 122 au sein de l'organe de retenue 121, l'étape de maintien est décomposée en une première étape de centrage (par la coopération de l'organe de centrage 122 avec le bouchon 25) et une deuxième étape de compression (via la coopération de l'organe de retenue 121 avec le récipient 2).

En effet, grâce à la mobilité de l'organe de centrage 122, il est possible de centrer le récipient 2 lorsque celui-ci est mal positionné avant que l'effort de maintien ne soit exercé.

Ainsi, lorsque l'extrémité d'appui 1211 de l'organe de retenue 121 exerce un effort sur l'épaule 24 du récipient 2, l'effort est uniforme sur le récipient 2 et centré sur l'axe principal A d'extension du récipient 2, ce qui permet d'éviter un risque de déformation du récipient 2 dû à un effort ponctuel, exercée par l'organe de retenue 121 sur le récipient 2. L'intégrité du récipient 2 s'en trouve donc préservé et le retournement du fond 21 peut être effectué de manière optimale.

## Revendications

1. Dispositif (1) de retournement de fond (21) de récipients (2), le dispositif (1) de retournement comprenant :
- des moyens de retournement (11) du fond (21) selon un axe (X) de translation, et
- au moins un outil (12) de maintien du récipient (2),
le au moins un outil (12) de maintien comprenant un organe de retenue (121) présentant un évidement central (1210), le au moins un outil (12) de maintien étant mobile en translation selon l'axe (X) de translation entre une position écartée par rapport à un récipient (2) et une position de coopération avec un récipient (2),
**caractérisé en ce que** l'organe de retenue (121) présente une extrémité d'appui (1211) qui, dans la position de coopération, vient en appui sur une épaule (24) du récipient (2),
et **en ce que** le au moins un outil (12) de maintien comprend également :
- un organe de centrage (122) monté dans l'évidement central (1210) de l'organe de retenue (121), et destiné à coopérer avec un bouchon (25) solidaire d'un col (23) du récipient (2),
l'organe de centrage (122) étant mobile, au sein de l'organe de retenue (121), entre :
- une première position, correspondant à la position écartée de l'organe de retenue (121) , dans laquelle il est situé au voisinage de l'extrémité d'appui (1211) de l'organe de retenue (121), et
- une deuxième position, correspondant à la position de coopération de l'organe de retenue (121) , dans laquelle il est écarté de l'extrémité d'appui (1211) de l'organe de retenue (121).

2. Dispositif (1) de retournement selon la revendication précédente, **caractérisé en ce que** l'organe de centrage (122) présente une forme évasée vers l'extérieur, destinée à coopérer avec le bouchon (25) du récipient (2).

3. Dispositif (1) de retournement selon l'une quelconque des revendications précédentes, **caractérisé en ce que** l'extrémité d'appui (1211) de l'organe de retenue (121) présente une forme évasée vers l'extérieur (1213) destinée à venir en appui sur l'épaule (24) du récipient (2).

4. Dispositif (1) de retournement selon l'une quelconque des revendications précédentes, **caractérisé en ce que** l'organe de retenue (121) présente une forme de cloche, et **en ce que** le au moins un outil (12) de maintien comprend un élément de rappel (13) intercalé entre un fond (1214) de la cloche et l'organe de centrage (122), l'élément de rappel (13) tendant à positionner l'organe de centrage (122) dans la première position.

5. Dispositif (1) de retournement selon l'une quelconque des revendications précédentes, **caractérisé en ce que** l'organe de retenue (121) comprend un embout (1212) portant l'extrémité d'appui (1211), l'embout (1212) étant monté de manière amovible à une extrémité libre de la cloche, opposée au fond (1214).

6. Dispositif (1) de retournement selon l'une quelconque des revendications précédentes, **caractérisé en ce qu'**il comprend un arbre (3) solidaire de moyens moteurs, l'organe de retenue (121) étant monté solidaire de l'arbre (3) par l'intermédiaire de moyens d'amortissement (4).

7. Outil (12) de maintien pour dispositif (1) de retournement de fond (21) de récipients (2), selon l'une des revendications précédentes.

8. Procédé de retournement d'un fond (21) de récipient (2) au moyen d'un dispositif (1) de retournement selon l'une quelconque des revendications 1 à 6, le procédé comprenant les étapes consistant à :
- maintenir un récipient (2) dont le fond (21) est à retourner, et
- retourner le fond (21) dudit récipient (2) par translation des moyens de retournement (11) le long de l'axe (X) de translation,
**caractérisé en ce que** l'étape consistant à maintenir le récipient (2) comprend les sous-étapes consistant à :
- déplacer l'outil (12) de maintien en direction du récipient (2) suivant l'axe (X) de translation, jusqu'à positionner l'organe de centrage (122) en appui du bouchon (25) dudit récipient (2) ;
- maintenir l'organe de centrage (122) en appui sur le bouchon (25) dudit récipient (2), et
- déplacer l'organe de retenue (121) en direction du récipient (2) suivant l'axe (X) de translation.

9. Procédé de retournement d'un fond (21) de récipient (2), selon la revendication précédente, **caractérisé en ce que** le retournement du fond (21) est initié lorsque l'organe de centrage (122) est en appui sur le récipient (2) et avant que l'organe de retenue (121) ne soit en appui sur une épaule du récipient (2).

10. Procédé de retournement d'un fond (21) de récipient (2), selon la revendication 8 ou 9, **caractérisé en ce que** l'organe de retenue (121) se dégage du récipient (2) avant la fin d'un mouvement de retour des moyens de retournement (11) jusqu'à une position initiale.

11. Procédé de retournement d'un fond (21) de récipient (2), selon la revendication 8, **caractérisé en ce que** l'organe de retenue (121) est en contact avec le récipient (2) préalablement au début d'un mouvement des moyens de retournement (11).

12. Procédé de retournement d'un fond (21) de récipient (2), selon l'une quelconque des revendications 8, 9 ou 11, **caractérisé en ce que** l'organe de retenue (121) est maintenu au contact du récipient jusqu'à la fin du mouvement des moyens de retournement (11).
